# EUROPEAN PATENT SPECIFICATION

(11) **EP 0 474 486 B1**
(45) Date of publication and mention of the grant of the patent: **28.02.1996**
(21) Application number: 91308119.6
(22) Date of filing: 04.09.1991
(51) Int. Cl.: A01N 43/20

(54) **Attractant compositions for fall webworm**
Lockmittel für weissen Bärenspinner
Attractif pour la chenille blanche

(30) Priority: 05.09.1990 JP 236106/90
(43) Date of publication of application: 11.03.1992
(73) Proprietor: Nitto Denko Co. Ltd., Ibaraki City, Osaka 567 (JP); FUJI YAKUHIN KOGYO KABUSHIKI KAISHA, Takaoka-shi Toyama 933 (JP)
(72) Inventor: Senda, Shuji, c/o Nitto Denko Co., Ltd., Ibaraki City, Osaka 567 (JP); Omata, Tetsuo, c/o Nitto Denko Co., Ltd., Ibaraki City, Osaka 567 (JP); Ninomiya, Yasuo, c/o Nitto Denko Co., Ltd., Ibaraki City, Osaka 567 (JP); Aburatani, Masakazu, c/o Fuji Yakuhin Kogyo K. K., Takaoka City, Toyama 933 (JP); Takeuchi, Tadashi, c/o Fuji Yakuhin Kogyo K. K., Takaoka City, Toyama 933 (JP)
(74) Representative: Dummett, Thomas Ian Peter

(56) References cited:
- TETRAHEDRON LETTERS, vol. 30, no. 26, 1989, pages 3405-3408, Maxwell Pergamon Macmillan plc, GB; M. TOTH et al.: "Identification of (3Z,6Z)-1,3,6-9,10- epoxyheneicosatriene and (3Z,6Z)-1,3,6-9,10-epoxyeicosatriene in the sex pheromone of Hyphantria cunea"

## Description

### BACKGROUND OF THE INVENTION

Fall webworm *(Hyphantria cunea)* is an omnivorous noxious insect originated in North America and does a great deal of damage to plants such as trees, agricultural products, and fruits in various parts of the world including the US, USSR, and Europe.

Fall webworm *(Hyphantria cunea)* larva of Fall webworm *(Hyphantria cunea)*, was also found eating trees such as planes or sycamores in Tokyo, Japan after the Second World War.

Although lots of effort has gone into research on extermination of Fall webworm *(Hyphantria cunea)*, it is now widely spread form Tohoku area (north of Japan) to Kyushu area (south of Japan), and does serious damage to trees especially in cities.

### PRIOR ART AND PROBLEMS THEREOF

Sex pheromones are known to be effective for exterminating vermin. Co-research by American and Russian researchers was proceeded to analyze the structure of sex pheromore attracting Fall webworm *(Hyphantria cunea)*.

Three components of the sex pheromone attracting Fall webworm *(Hyphantria cunea)* , (3Z,6Z)-cis-9,10-epoxy-3,6-heneicosadiene (formula 1), (9Z, 12Z, 15Z)-9, 12, 15-octadecatrien-1-al (formula 3), (9Z, 12Z)-9, 12-octadecadien-1-al (formula 5), were reported by Roelofs et al ( A.S. Hill, B.G. Kovalev, L.N. Nikolaeva, W.L. Roelofs, J. Chem. Ecol., 8, 383 (1982)). 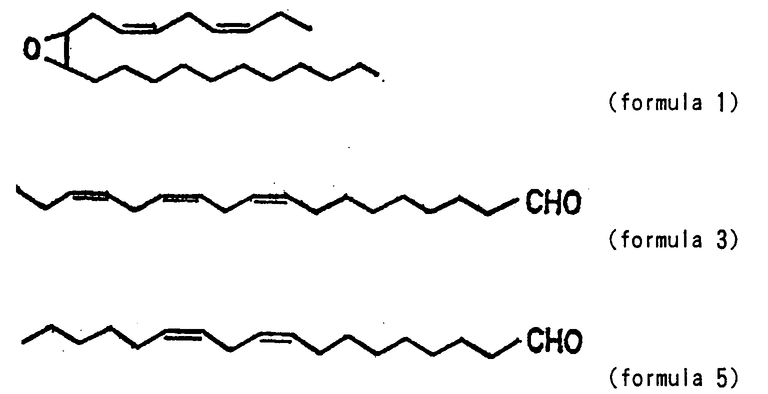
Various tests were performed, in Japan and Europe, with an attractant consisting of the three components to evaluate the effect of the attractant on Fall webworm *(Hyphantria cunea)*.

The result was, however, unfavorable; the attractant has only limited atteaction effect on Fall webworm *(Hyphantria cunea)* and is of substantially no practical use.

Two other components of the sex pheromone attracting Fall webworm *(Hyphantria cunea)*, (3Z, 6Z)-cis-9, 10-epoxy-1, 3, 6-heneicosatriene (formula 2), and (3Z, 6Z)-cis-9, 10-epoxy-1, 3, 6-eicosatriene (formula 4), were found by Toth et al (M. Toth, H.R. Buser, A. Pena, H. Arn, K. Mori, T. Takeuchi, L.N. Nikolaeva, B.G. Kavalev, Tetrahedron Letter, 30, 3405 (1989)).

An attractant including all the five components of the sex pheromone was found to have great attraction effect on Fall webworm *(Hyphantria cunea)* . 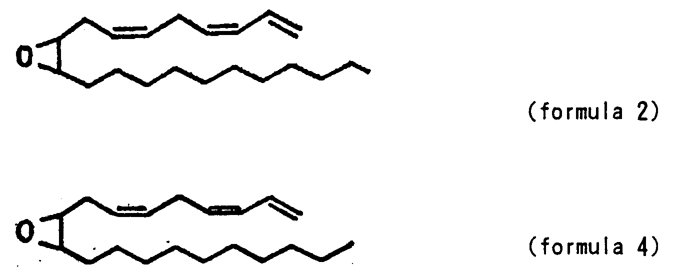
Although the attractant including all the five components has substantially the same effect as naturel sex pheromone for Fall webworm *(Hyphantria cunea)*, it has drawbacks; low yield and thereby high manufacturing cost of the attractant.

Each components of the sex pheromone is unstable and easily decomposed, and thus the manufacturing process requires lots of complicated steps and very careful attention.

Furthermore, each components is obtained in low yield.

Manufacture of the attractant for Fall webworm *(Hyphantria cunea)* including all the five components is costly but still of unsatisfactorily low productivity.

Accordingly, the attractant including five components of sex pheromone is not practically used for preventing the breeding of or massively exterminating Fall webworm *(Hyphantria cunea)*.

### PROBLEMS TO BE SOLVED BY THE INVENTION

The objective of the invention is thus to provide attractant composition including less than five components of sex pheromone attracrting Fall webworm *(Hyphantria cunea)*, which is inexpensively and efficiently manufactured and has substantially the same effects as an attractant including all the five components of the sex pheromone.

### SUMMARY OF THE INVENTION

The present invention relates to attractant compositions for Fall webworm *(Hyphantria cunea)* including sex pheromone attracting Fall webworm *(Hyphantria cunea)*, and is more particularly directed to attractant composition efficiently attracting Fall webworm *(Hyphantria cunea)* which is manufactured in relatively high yield, and thereby effectively used for preventing the breeding of and massively exterminating Fall webworm *(Hyphantria cunea)*.

The above and other objectives are realized by attractant composition for Fall webworm *(Hyphantria cunea)* comprising sex pheromone attracting Fall webworm *(Hyphantria cunea)*, the sex pheromone comprising at least (3Z, 6Z)-cis-9, 10-epoxy-3, 6-henicosadiene (formula 1), (3Z, 6Z)-cis-9, 10-epoxy-1, 3, 6-henicosadiene (formula 2), and (9z, 12z, 15z)-9, 12, 15-octadecatrien-1-al (formula 3), chosen from (3Z, 6Z)-cis-9, 10-epoxy-3,6-henicosadiene (formula 1), (3Z, 6Z)-cis-9, 10-epoxy-1, 3, 6-henicosatriene (formula 2), (9Z, 12Z, 15Z)-9, 12, 15-octadecatrien-1-al (formula 3), and (3Z, 6Z)-cis-9, 10-epoxy-1, 3, 6-icosatriene (formula 4).

From another aspect, the present invention comprises a composition suitable for use as an attractant composition for Fall webworm (Hyphantria cunea), characterised in that it comprises the compounds (3Z,6Z)-cis-9,10-epoxy-3,6-henicosadiene (formula 1), (3Z,6Z)-cis-9,10-epoxy-1,3,6-henicosatriene (formula 2) and (9Z,12Z,15Z)-9,12,15-octadecatriene-1-al (formula 3), but substantially none of the compound (9Z,12Z)-9,12-octadecadien-1-al (formula 5).

Preferably, the compound of formula 1 comprises the optical isomer (3Z,6Z,9S,10R)-cis-9,10-epoxy-3,6-henicosadiene (formula 1a), and the compound of formula 2 comprises the optical isomer of the formula (3Z,6Z,9S,10R)-cis-9,10-epoxy-1,3,6-henicosatriene (formula 2a).

Preferably, the composition also comprises the compound (3Z,6Z)-cis-9,10-epoxy-1,3,6-icosatriene (formula 4), which preferably comprises the optical isomer (3Z,6Z,9S,10R)-cis-9,10-epoxy-1,3,6-icosatriene (formula 4a).

The invention also provides a method for combating an infestation of Fall webworm using an attractant composition of the invention.

The invention further provides a method for making an attractant composition of the invention by admixing the compounds of formulae 1, 2 and 3, optionally in a solvent or carrier medium.

The compounds of formulae 1, 2 and 3 can be present in a wide range of weight proportions, but are typically present in weight proportions of 0.5-2.0, eg. 1.0-1.10, parts of compound 1, 0.2-1.0, eg. 0.3-0.5, parts of compound 2 and 0.2 - 1.0, eg. 0.3-0.5, parts of compound 3 based on the active ingredients; and can be used in the form of a fluid spray or can be applied to a solid carrier.

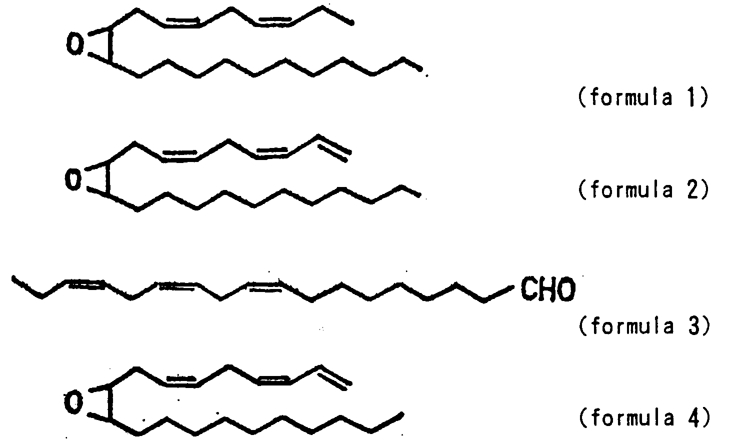

### DETAILED DESCRIPTION OF THE INVENTION

The attractant composition of the invention essentially include three components of sex pheromone for Fall webworm *(Hyphantria cunea)*, (3Z, 6Z)-cis-9, 10-epoxy-3, 6-henicosadiene (formuia 1), (3Z,6Z)-cis-9,10-epoxy-1,3,6-henicosatriene (formula 2), and (9Z,12Z,15Z),-9,12,15-octadecatrien-1-al (formula 3.) 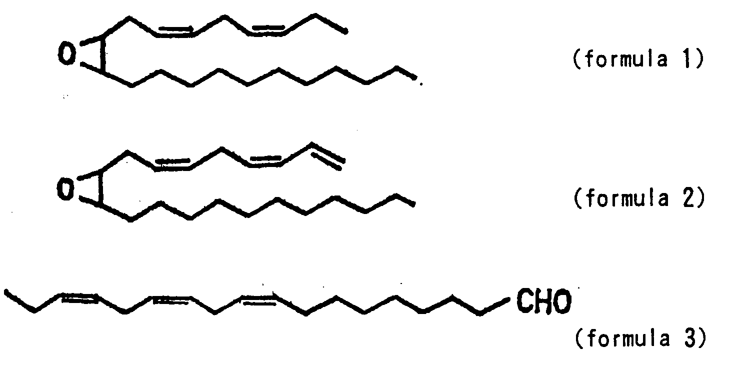
(3Z,6Z)-cis-9,10-epoxy-3,6-henicosadiene (formula 1) is an oily substance.

An optically active substance of (3Z,6Z)-cis-9,10-epoxy-3,6-henicosadiene (formula 1), (3Z,6Z,9S,10R)-cis-9,10-epoxy-3,6-henicosadiene (formula la), has greater attraction effect on Fall webworm *(Hyphantria cunea).* 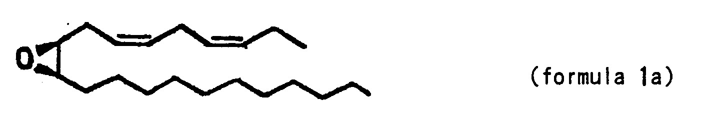
(3Z, 6Z)-cis-9, 10-epoxy-3, 6-heicosadiene (formula 1) is prepared from 3-pentyn-1-ol via plural steps (K. Mori and T. T.Ebata, Tetrahedron Letter 22, 4281 (1981)).

(3Z, 6Z)-cis-9, 10-epoxy-1, 3, 6-henicosatriene (formula 2) is an oily substance (melting point; 14 to 15 °C; index of refrection by sodium D ray at 16°C : 1.4781).

An optically active substance of (3Z,6Z)-cis-9,10-epoxy-1,3,6-henicosatriene (formula 2), (3Z,6Z,9S,10R)-cis-9,10-epoxy-1,3,6-henicosatriene (formula 2a), has greater attraction effect on Fall webworm *(Hyphantria cunea)*. 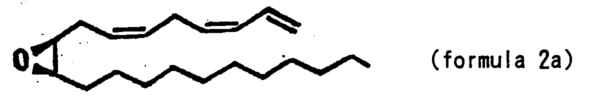
(3Z,6Z)-cis-9,10-epoxy-1,3,6-henicosatriene (formula 2) is prepared from 1,4-dichloro-2-butyne via plural steps (K. Mori and T. Takeuchi, Liebigs Ann Chem., 453 (1989)).

(9Z,12Z,15Z)-9,12,15-octadecatrien-1-al (formula 3) has a boiling point of 140 to 145°C/ 0,8 mmHg.

(9Z, 12Z, 15Z)-9, 12, 15-octadecatrien-1-al (formula 3) is prepared from α-linolenic acid.

When the attractant composition includes (3Z, 6Z)-cis-9, 10-epoxy-1, 3, 6-icosatriene (formula 4) other than the three essential components, attraction effects of the composition is much improved. 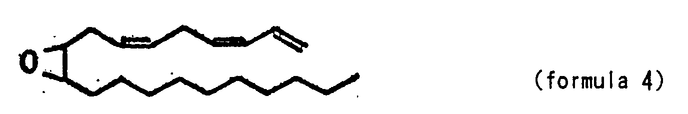
(3Z, 6Z)-cis-9, 10,-epoxy-1, 3, 6-icosatriene (formula 4) is an oily substance (melting point: 2 to 3 °C ; index of refraction by sodium D ray at 16 °C: 1.4787).

An optically active substance of (3Z, 6Z)-cis-9, 10-epoxy-1, 3, 6-icosatriene (formula 4), (3Z, 6Z, 9S, 10R)-cis-9, 10-epoxy-1, 3, 6-icosatriene (formula 4a), has greater attraction effect on Fall webworm *(Hyphantria cunea)*. 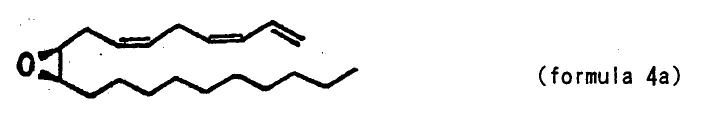
(3Z,6Z)-cis-9,10-epoxy-1,3,6-eicosatriene (formula 4) is prepared by reacting (3Z,6Z)-cis-9,10-epoxy-1,3,6-undecatrienyl tosylate with lithium di(n-decyl) cuprate.

The attractant composition of the invention essentially include (3Z,6Z)-cis-9,10-epoxy-3,6-henicosadiene (formula 1), (3Z,6Z)-cis-9,10-epoxy-1,3,6-henicosatriene (formula 2), and (9Z,12Z,15Z)-9,12,15-octadecatrien-1-al (formula 3), but not including (9Z,12Z)-9,12-octadacadien-1-al (formula 5). 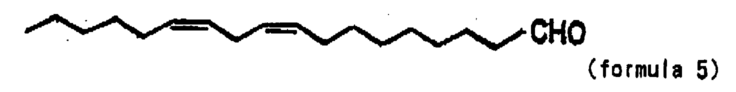
The reason is that (9Z,12Z)-9,12-octadecadien-1-al (formula 5) has substantially no attraction effect on Fall webworm (*Hyphantria cunea*) as seen in examples and references below.

Test Examples of the attractant composition for Fall webworm (*Hyphantria cunea*) according to the invention are shown hereinafter with Comparative Examples which clearly depict effect of the invention.

### TEST EXAMPLES AND COMPARATIVE EXAMPLES

Attractants for Fall webworm (*Hyphantria cunea*) each consisting of one or more components of sex pheromone were prepared as shown in Table 1.

Attraction effect on Fall webworm (*Hyphantria cunea*) was examined in the following manner by using the attractants of Test examples and Comparative examples and the number of Fall webworm (Hyphantria cunea) captured was counted for each attractant.

Triangle pieces of filter paper (each side: approximately 2cm) impregnated with each attractant were prepared and adhered onto an adhesive board.

The adhesive board in wire net was suspended on roadside trees or other places in Osaka (July 18, 3:00 to 5:00).

The number of Fall webworm (*Hyphantria cunea*) captured on the adhesive board was then counted.

The result of attraction test is also shown in Table 1.

**Table 1**

| | Combination of pheromone components | | | | | Number of insects captured |
|---|---|---|---|---|---|---|
| | 1 | 2 | 3 | 4 | 5 | |
| Test Examples | ○ | ○ | ○ | ― | ― | 21 |
| | ○ | ○ | ○ | ○ | ― | 25 |
| | ○ | ○ | ○ | ○ | ○ | 26 |
| Comparative Examples | ○ | ○ | ― | ― | ― | 1 |
| | ○ | ― | ○ | ― | ― | 0 |
| | ― | ○ | ○ | ― | ― | 1 |
| | ○ | ○ | ○ | ― | ○ | 20 |
| | ― | ― | ― | ○ | ― | 0 |
| | ― | ― | ― | ― | ○ | 1 |
| | ― | ― | ― | ○ | ○ | 1 |
| 1: (3Z,6Z)-cis-9,10-epoxy-3,6-henicosadiene 1.05 mg 2: (3Z,6Z)-cis-9,10-epoxy-1,3,6-henicosatriene 0.42 mg 3: (9Z,12Z,15Z)-9,12,15-octadecatrien-1-al 0.4 mg 4: (3Z,6Z)-cis-9,10-epoxy-1,3,6-icosatriene 0.015 mg 5: (9Z,12Z)-9,12-octadecadien-1-al 0.05 mg | | | | | | |

The attractant composition of the invention including three components of sex pheromone. (3Z,6Z)-cis-9,10-epoxy-3,6-henicosadiene (formula 1), (3Z,6Z)-cis-9,10-epoxy-1,3,6-henicosatriene (formula 2), and (9Z,12Z,15Z)-9,12,15-octadecatrien -1-al (formula 3) shows substantially the same effect on Fall webworm (*Hyphantria cunea*) as attractant composition including all the five components of sex pheromone.

Since attractants without one of the three components have very little effect on Fall webworm (*Hyphantria cunea*), the three components of sex pheromone are essential for the attractant composition.

Although (3Z,6Z)-cis-9,10-epoxy-1,3,6-icosatriene alone does not show any attraction effect, the attractant including (3Z,6Z)-cis-9,10-epoxy-1,3,6-icosatriene other than the three essential components has greater effect on Fall webworm (*Hyphantria cunea*).

The result of the attraction test clearly shows that (9Z,12Z)-9,12 -octadecadien-1-al is not an effective components either used alone or added to the three essential components.

### EFFECT OF THE INVENTION

The invention provides attractant compositions for Fall webworm (*Hyphantria cunea*) comprising sex pheromone attracting Fall webworm (*Hyphantria cunea*), the sex pheromone comprising at least (3Z, 6Z)-cis-9, 10-epoxy-3, 6-henicosadiene (formula 1), (3Z, 6Z)-cis-9, 10-epoxy-1, 3, 6-henicosatriene (formula 2), and (9Z, 12Z, 15Z)-9, 12, 15-octadecatrien-1-al (formula 3) chosen from (3Z, 6Z)-cis-9, 10-epoxy-3, 6-henicosadiene (formula 1), (3Z, 6Z)-cis-9, 10-epoxy-1, 3, 6-henicosatriene (formula 2), (9Z, 12Z, 15Z)-9, 12, 15-octadecatrien-1-al (formula 3), and (3Z, 6Z)-cis-9, 10-epoxy-1, 3, 6-icosatriene (formula 4).

The attractant compositions of the invention has high attraction effect on Fall webworm *(Hyphantria cunea)* and is of high yield and thereby manufactured at relatively low cost.

The attractant composition of the invention is thus practically used for preventing the breeding of or massively exterminating Fall webworm *(Hyphantria cunea).*

## Claims

1. A composition suitable for use as an attractant composition for Fall webworm (Hyphantria cunea), characterised in that the composition comprises at least the compound (3Z,6Z)-cis-9,10-epoxy-3,6-henicosadiene (formula 1), the compound (3Z,6Z)-cis-9,10-epoxy-1,3,6-henicosatriene (formula 2) and the compound (9Z,12Z,15Z)-9,12,15-octadecatriene-1-al (formula 3), selected from the group of active attractant compounds consisting of the compound (3Z,6Z)-cis-9,10-epoxy-3,6-henicosadiene (formula 1), compound (3Z,6Z)-cis-9,10-epoxy-1,3,6-henicosatriene (formula 2), the compound (9Z,12Z,15Z)-9,12,15-octadecatriene-1-al (formula 3), and the compound (3Z,6Z)-cis-9,10-epoxy-1,3,6-icosatriene (formula 4), and further characterised in that the composition does not include the compound (9Z,12Z)-9,12-octadecadien-1-al (formula 5).

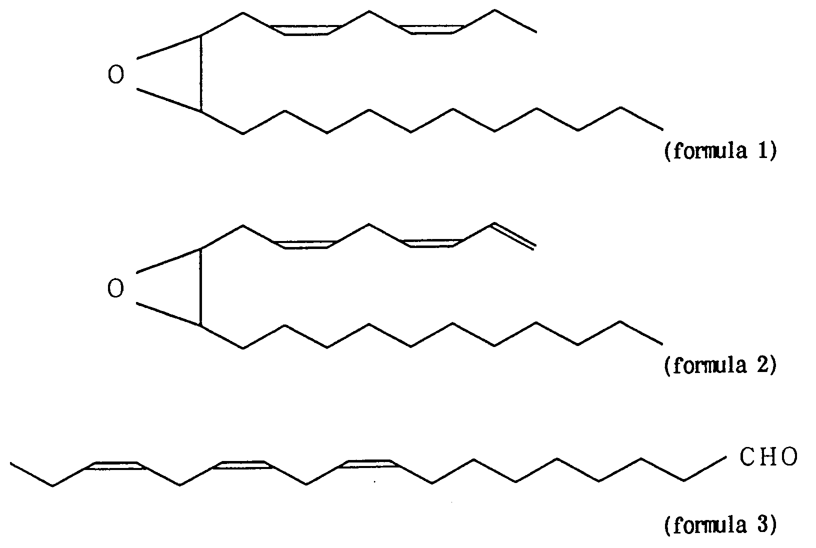

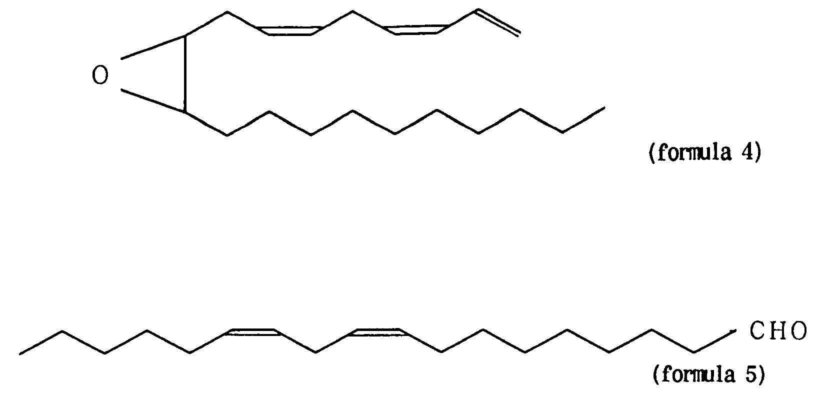

2. A composition as claimed in claim 1, characterised in that the compound of formula 1 comprises the optical isomer (3Z,6Z,9S,10R)-cis-9,10-epoxy-3,6-henicosadiene (formula 1a).

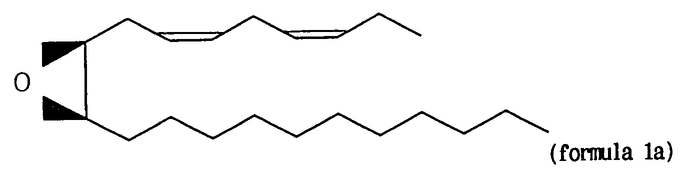

3. A composition as claimed in either of claims 1 or 2, characterised in that the compound of formula 2 comprises the optical isomer (3Z,6Z,9S,10R)-cis-9,10-epoxy-henicosatriene (formula 2a).

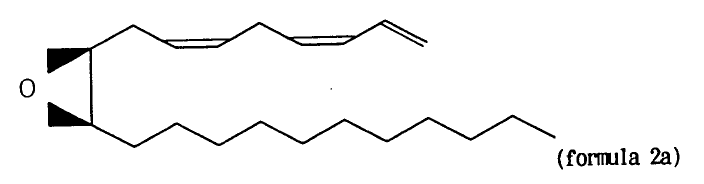

4. A composition suitable for use as an attractant composition for Fall webworm (Hyphantria cunea), characterised in that the composition comprises the compound (3Z,6Z)-cis-9,10-epoxy-3,6-henicosadiene (formula 1), the compound (3Z,6Z)-cis-9,10-epoxy-1,3,6-henicosatriene (formula 2) and the compound (9Z,12Z,15Z)-9,12,15-octadecatriene-1-al (formula 3), characterised in that the compound of formula 1 comprises the optical isomer (3Z,6Z,9S,10R)-cis-9,10-epoxy-3,6-henicosadiene (formula 1a), and/or that the compound of formula 2 comprises the optical isomer (3Z,6Z,9S,10R)-cis-9,10-epoxy-henicosatriene (formula 2a), and further characterised in that the composition does not include the compound (9Z,12Z)-9,12-octadecadien-1-al (formula 5).

5. A composition as claimed in any one of the preceding claims, characterised in that the composition also comprises the compound (3Z,6Z)-cis-9,10-epoxy-1,3,6-icosatriene (formula 4).

6. A composition as claimed in claim 5, characterised in that the compound of formula 4 comprises the optical isomer (3Z,6Z,9S,10R)-cis-9,10-epoxy-1,3,6-icosatriene (formula 4a).

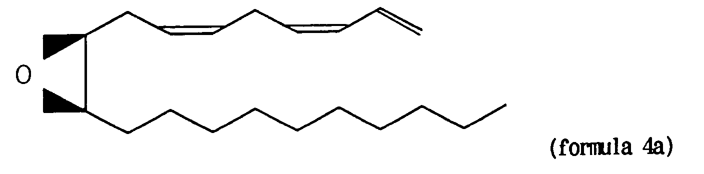

7. A method of combating an infestation of Fall webworm, characterised in that a composition as claimed in any one of the preceding claims is used as a sex pheromone attractant for the Fall webworm.

8. A method for making an attractant composition as claimed in any one of claims 1 to 6, characterised in that the active ingredients are admixed with one another.

9. A composition or method as claimed in any one of the preceding claims, characterised in that the active ingredients are present in a weight proportion of 0.5 - 2.0 parts of compound 1, 0.2 - 1.0 parts of compound 2 and 0.2 - 1.0 parts of compound 3.

## Patentansprüche

1. Zusammensetzung zur Verwendung als Lockstoffzusammensetzung für den weissen Bärenspinner (Hyphantria cunea),
dadurch **gekennzeichnet**,
daß die Zusammensetzung mindestens die Verbindung (3Z,6Z)-cis-9,10-Epoxy-3,6-Henicosadien (Formel 1), die Verbindung (3Z,6Z)-cis-9,10-Epoxy-1,3,6-henicosatrien (Formel 2) und die Verbindung (9Z,12Z,15Z)-9,12,15-Octadecatrien-1-al (Formel 3), ausgewählt aus der Gruppe von wirksamen Lockstoffverbindungen bestehend aus der Verbindung (3Z,6Z)-cis-9,10-Epoxy-3,6-Henicosadien (Formel 1), der Verbindung (3Z,6Z)-cis-9,10-Epoxy-1,3,6-henicosatrien (Formel 2), der Verbindung (9Z,12Z,15Z)-9,12,15-Octadecatrien-1-al (Formel 3) und der Verbindung (3Z,6Z)-cis-9,10-Epoxy-1,3,6-icosatrien (Formel 4), enthält und weiterhin dadurch gekennzeichnet, daß die Zusammensetzung die Verbindung (9Z,12Z)-9,12-Octadecadien-1-al (Formel 5) nicht enthält.

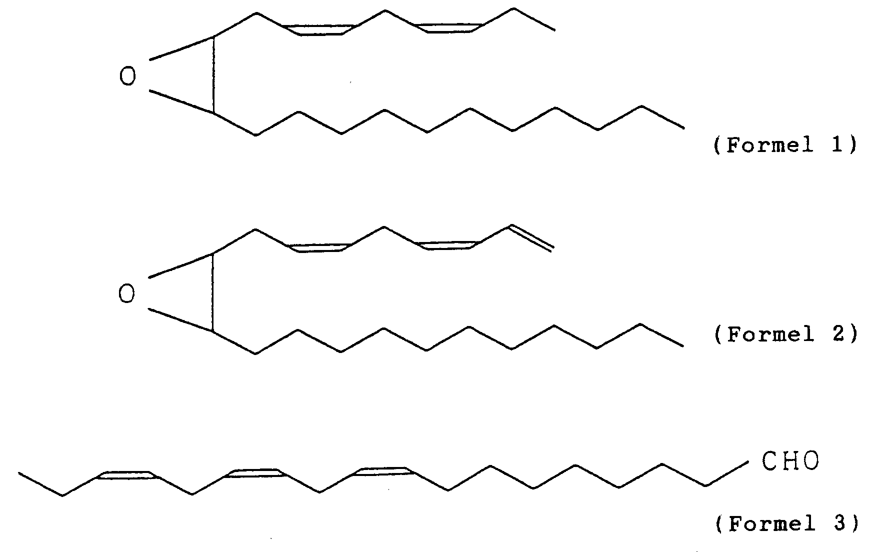

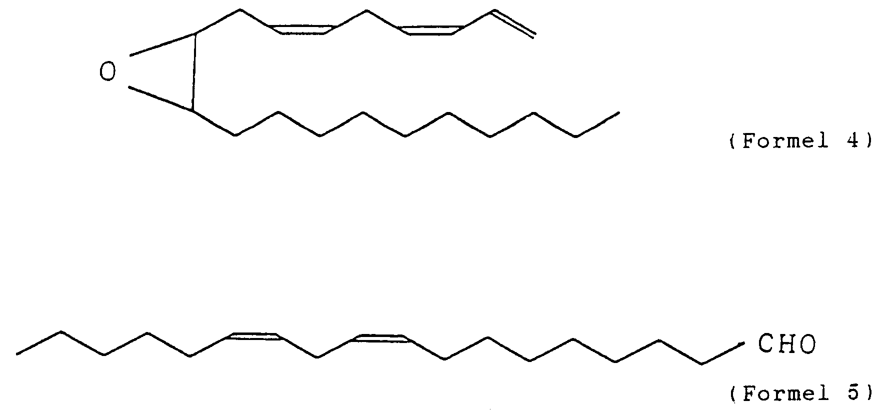

2. Zusammensetzung nach Anspruch 1,
dadurch **gekennzeichnet**,
daß die Verbindung der Formel 1 das optische Isomer (3Z,6Z,9S,10R)-cis-9,10-Epoxy-3,6-Henicosadien (Formel 1a) aufweist.

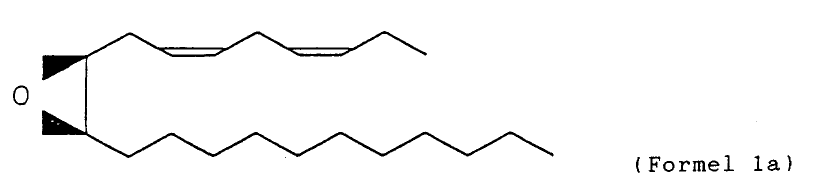

3. Zusammensetzung nach Anspruch 1 oder 2,
dadurch **gekennzeichnet**,
daß die Verbindung der Formel 2 das optische Isomer (3Z,6Z,9S,10R)-cis-9,10-Epoxy-1,3,6-henicosatrien (Formel 2a) aufweist.

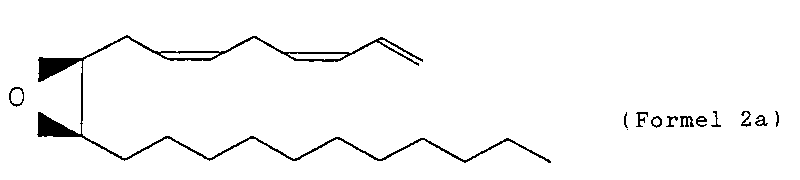

4. Zusammensetzung zur Anwendung als Lockstoffzusammensetzung für den weissen Bärenspinner (Hyphantria cunea), dadurch gekennzeichnet, daß die Zusammensetzung die Verbindung (3Z,6Z)-cis-9,10-Epoxy-3,6-Henicosadien (Formel 1), die Verbindung (3Z,6Z)-cis-9,10-Epoxy-1,3,6-henicosatrien (Formel 2) und die Verbindung (9Z,12Z,15Z)-9,12,15-Octadecatrien-1-al (Formel 3) enthält, dadurch gekennzeichnet, daß die Verbindung der Formel 1 das optische Isomer (3Z,6Z,9S,10R)-cis-9,10-Epoxy-3,6-Henicosadien (Formel 1a) und/oder daß die Verbindung der Formel 2 das optische Isomer (3Z,6Z,9S,10R)-cis-9,10-Epoxy-1,3,6-henicosatrien (Formel 2a) enthält und weiter dadurch gekennzeichnet, daß die Zusammensetzung die Verbindung (9Z,12Z)-9,12-Octadecadien-1-al (Formel 5) nicht enthält.

5. Zusammensetzung nach einem der vorhergehenden Ansprüche,
dadurch **gekennzeichnet**,
daß die Zusammensetzung auch die Verbindung (3Z,6Z)-cis-9,10-Epoxy-1,3,6-icosatrien (Formel 4) enthält.

6. Zusammensetzung nach Anspruch 5,
dadurch **gekennzeichnet**,
daß die Verbindung der Formel 4 das optische Isomer (3Z,6Z,9S,10R)-cis-9,10-Epoxy-1,3,6-icosatrien (Formel 4a) aufweist.

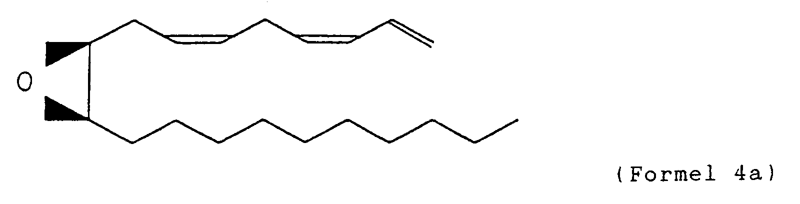

7. Verfahren zur Bekämpfung eines Befalls mit dem weissen Bärenspinner,
dadurch **gekennzeichnet**,
daß eine Zusammensetzung nacheinem der vorhergehenden Ansprüche als Sexualpheromon-Lockstoff für den weissen Bärenspinner eingesetzt wird.

8. Verfahren zur Herstellung der Lockstoffzusammensetzung nach einem der Ansprüche 1 bis 6,
dadurch **gekennzeichnet**,
daß die wirksamen Bestandteile miteinander vermischt werden.

9. Zusammensetzung oder Verfahren nach einem der vorhergehenden Ansprüche,
dadurch **gekennzeichnet**,
daß die wirksamen Bestandteile in Gewichtsanteilen von 0,5 bis 2,0 Teilen der Verbindung 1, 0,2 bis 1,0 Teilen der Verbindung 2 und 0,2 bis 1,0 Teilen der Verbindung 3 vorhanden sind.

## Revendications

1. Composition pouvant servir convenablement de composition attractive pour la chenille blanche (Hyphantria cunea), caractérisée en ce qu'elle comprend au moins le composé (3Z, 6Z)-cis-9, 10-époxy-3, 6-heneicosadiène (formule 1), le composé (3Z, 6Z)-cis-9, 10-époxy-1, 3, 6-heneicosatriène (formule 2) et le composé (9Z, 12Z, 15Z)-9, 12, 15-octadécatrién-1-al (formule 3), choisis dans le groupe de composés doués d'activité attractive constitués du composé (3Z, 6Z)-cis-9, 10-époxy-3, 6-heneicosadiéne (formule 1), le composé (3Z, 6Z)-cis-9, 10-époxy-1, 3, 6-heneicosatriène (formule 2), le composé (9Z, 12Z, 15Z)-9, 12, 15-octadécatrién-1-al (formule 3), et le composé (3Z, 6Z)-cis-9, 10-époxy-1, 3, 6-eicosatriène (formule 4), et caractérisée en outre en ce qu'elle ne renferme pas le composé (9Z, 12Z)-9,12-octadécadién-1-al (formule 5).

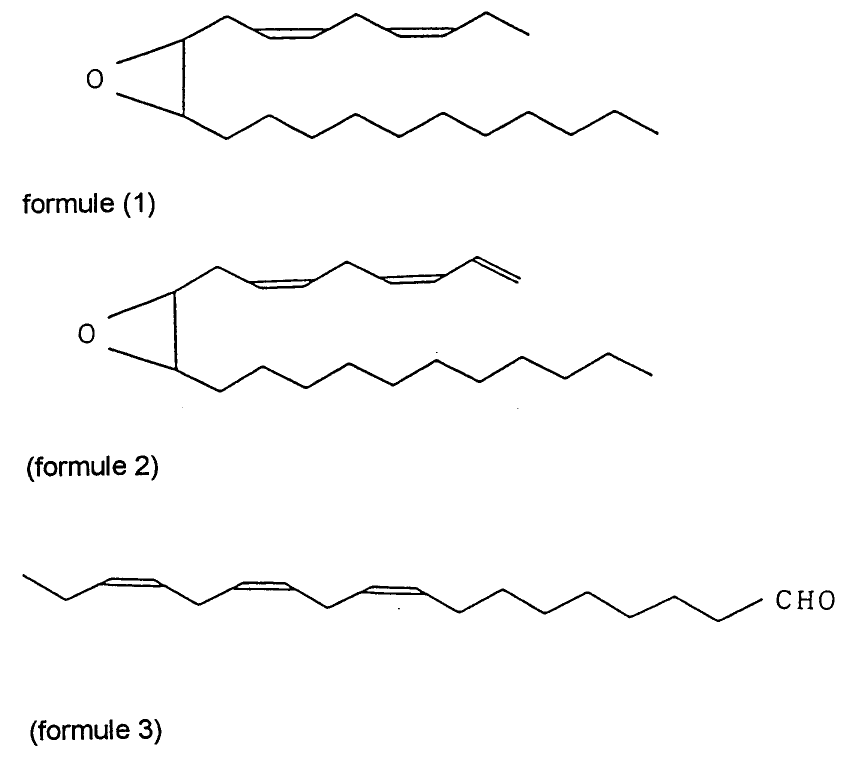

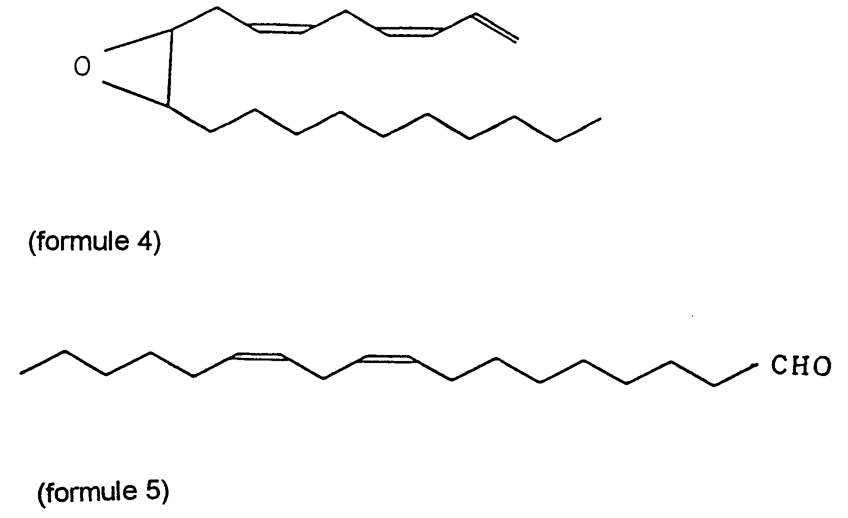

2. Composition selon la revendication 1, caractérisée en ce que le composé de formule 1 comprend l'isomère optique (3Z, 6Z, 9S, 10R)-cis-9, 10-époxy-3, 6-heneicosadiène (formule 1a).

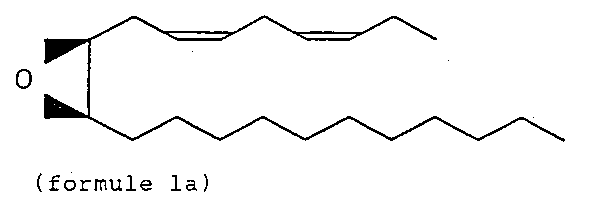

3. Composition selon la revendication 1 ou 2, caractérisée en ce que le composé de formule 2 comprend l'isomére optique (3Z, 6Z, 9S, 10R)-cis-9, 10-époxy-heneicosatriène (formule 2a).

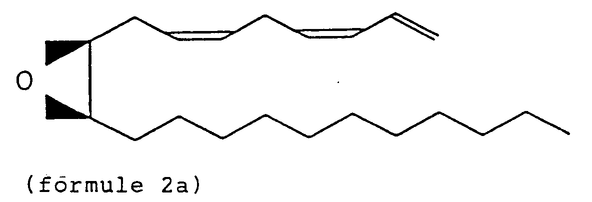

4. Composition pouvant servir convenablement de composition attractive pour la chenille blanche (Hyphantria cunea), caractérisée en ce qu'elle comprend le composé (3Z, 6Z)-cis-9, 10-époxy-3, 6-heneicosadiène (formule 1), le composé (3Z, 6Z)-cis-9, 10-époxy-1, 3, 6-heneicosatriène (formule 2) et le composé (9Z, 12Z, 15Z)-9, 12, 15-octadécatrién-1-al (formule 3), composition caractérisée en ce que le composé de formule 1 comprend l'isomère optique (3Z, 6Z, 9S, 10R)-cis-9, 10-époxy-3, 6-heneicosadiène (formule 1a), et/ou le composé de formule 2 comprend l'isomère (3Z, 6Z, 9S, 10R)-cis-9, 10-époxyheneicosadiène (formule 2a), et caractérisée en outre en qu'elle ne comprend pas le composé (9Z, 12Z)-9, 12-octadécatrién-1-al (formule 5).

5. Composition selon l'une quelconque des revendications précédentes, caractérisée en ce que la composition comprend également le composé (3Z, 6Z)-cis-9, 10-époxy-1, 3, 6-eicosatriène (formule 4).

6. Composition selon la revendication 5, caractérisée en ce que le composé de formule 4 comprend l'isomère optique (3Z, 6Z, 9S, 10R)-cis-9, 10-époxy-1, 3, 6-eicosatriéne (formule 4a).

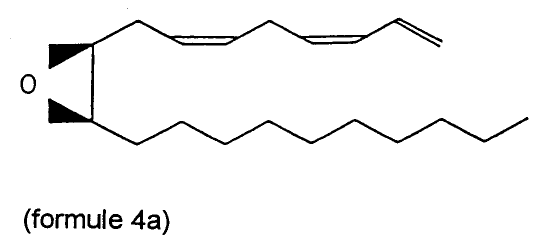

7. Procédé pour lutter contre le pullulement de la chenille blanche caractérisée en ce qu'une composition selon l'une quelconque des revendication précédentes est utilisée en tant qu'attractif à base de phéromone sexuelle pour la chenille blanche.

8. Procédé d'obtention d'une composition attractive selon l'une quelconque des revendications 1 à 6, caractérisé en ce que les principes actifs sont mélangés ensemble.

9. Composition ou procédé selon l'une quelconque des revendications précédentes, caractérisé en ce que les principes actifs sont présents en terme de poids à raison de 0,5 à 2,0 parties du composé 1, de 0,2 à 1,0 parties du composé 2 et de 0,2 à 1,0 parties du composé 3.
